# EUROPEAN PATENT SPECIFICATION

(11) **EP 3 510 264 B1**
(45) Date of publication and mention of the grant of the patent: **21.12.2022**
(21) Application number: 17849198.1
(22) Date of filing: 22.08.2017
(51) Int. Cl.: F01P 7/14, F01K 9/00, F01K 23/06, F01N 5/02, F01P 3/12, F01P 3/20, F02G 5/04

(54) **A METHOD FOR CONTROLLING THE TEMPERATURE OF A COOLING FLUID IN A COOLING SYSTEM AND A COOLING SYSTEM**
VERFAHREN ZUR STEUERUNG DER TEMPERATUR EINER KÜHLFLÜSSIGKEIT IN EINEM KÜHLSYSTEM UND KÜHLSYSTEM
PROCÉDÉ DE RÉGULATION DE LA TEMPÉRATURE D'UN FLUIDE DE REFROIDISSEMENT DANS UN SYSTÈME DE REFROIDISSEMENT ET SYSTÈME DE REFROIDISSEMENT

(30) Priority: 09.09.2016 SE 1651213
(43) Date of publication of application: 17.07.2019
(73) Proprietor: Scania CV AB, 151 87 Södertälje (SE)
(72) Inventor: JOHANSSON, Björn, 125 31 Älvsjö (SE); HÖCKERDAL, Erik, 151 44 Södertälje (SE)
(74) Representative: Scania CV AB
(86) International application number: PCT/SE2017/050837
(87) International publication number: WO 2018/048338

(56) References cited:
- EP-A2- 1 475 532
- WO-A1-2016/089277
- DE-A1-102010 034 231
- DE-A1-102011 085 961
- DE-A1-102014 019 684
- DE-A1-102014 019 684
- DE-A1-102014 204 257
- JP-A- 2008 196 424
- JP-A- 2008 196 424

## Description

### TECHNICAL FIELD

The present invention relates to a method for controlling the temperature of a cooling fluid in a cooling system coupled with an internal combustion engine of a vehicle, a cooling system, a vehicle comprising such a cooling system, a computer program and a computer program product according to the appended claims.

### BACKGROUND

Vehicle manufacturers are today striving to increase engine efficiency and reduce fuel consumption. This is specifically an issue for manufacturers of heavy vehicles, such as trucks and buses. One way of improving engine efficiency and fuel consumption is waste heat recovery. In vehicles with internal combustion engines some of the energy from the fuel is dissipated as heat through the exhaust pipes and the engine cooling system. By the use of a waste heat recovery system the heat from the exhaust gases may instead be used for example to heat various vehicle components or to produce mechanical work or electricity. Such mechanical work may for example be transferred to the driveline and thus be used to propel the vehicle.

A waste heat recovery system typically comprises at least one heat exchanger which transfers heat between a heat source, such as exhaust gases, and a working fluid. The heat transfer between the heat source and the working fluid is an exchange of energy resulting in a change in temperature. A waste heat recovery system may also be based on a Rankine cycle and thus comprise a working fluid, a pump for circulating the working fluid in a circuit, at least one evaporator (heat exchanger), an expansion device and a condenser. The condenser is typically connected to a cooling system, which may be part of the engine cooling system. The working fluid in such waste heat recovery system is suitably in a liquid state to start with. The pump pressurizes the working fluid which is pumped through the evaporator. The working fluid is heated by for example exhaust gases led through the evaporator and the working fluid thereby evaporates. The vapour may subsequently be expanded in the expansion device. By means of the expansion device the recovered heat may thereby be converted into mechanical work. The vapour is thereafter cooled in the condenser, such that the working fluid is brought back to its initial liquid state.

The operating temperature of a cooling fluid in the cooling system needs to be controlled so that the temperature will not become too high. If the cooling liquid temperature becomes too high there is a risk that the condenser or other components of the cooling system will be damaged. It is therefore important that the temperature of the cooling fluid in the cooling system can be controlled.

Document US2016053666 describes a cooling circuit including an internal combustion engine, a coolant cooler, a first thermostat, a first pump, a condenser, a second thermostat and a second pump, wherein a cooling agent can flow through the cooling circuit. The combustion engine, first pump, coolant cooler and first thermostat are arranged in a first circuit, and the condenser, second thermostat and second pump are arranged in a second circuit, and wherein the first circuit and second circuit are in fluid communication with one another in at least two points. The coolant transition between a coolant inlet and a coolant outlet of a thermostat can be influenced by an adjustor, which may be formed of temperature sensitive-elements. Depending on the position of the adjustor, the coolant can be allowed to flow from a coolant inlet directly to the coolant outlet of the thermostat. Alternatively, a mixing position which enables a simultaneous flow of coolant from both coolant inlets to the coolant outlet can be attained. However, sufficiently accurate and on the other hand flexible control of the cooling system cannot be obtained by means of thermostats. Also, there is a need to simplify and improve the existing cooling systems connected to waste heat recovery systems.

A cooling circuit for an internal combustion engine with a waste heat recovery system is also known from DE102014204257.

### SUMMARY OF THE INVENTION

Despite known solutions in the field, there is still a need to develop a method for controlling the temperature of a cooling fluid in a cooling system coupled or associated with an internal combustion engine of a vehicle, which optimizes engine efficiency, fuel consumption and which control system is robust.

An objective of the present invention is to provide an advantageous method for controlling the cooling fluid temperature in a cooling system, which optimizes engine efficiency and fuel consumption.

Another objective of the invention is to provide a method for controlling the temperature of a cooling fluid in a cooling system, which can quickly actuate valves in the system and thus quickly optimize the cooling fluid temperature.

A further objective of the invention is to provide a robust cooling system with reduced risk for operational disturbances.

The herein mentioned objectives are achieved by a method for controlling the temperature of a cooling fluid in a cooling system, a cooling system, a vehicle, a computer program and a computer program product according to the independent claims.

Accordingly, the present invention relates to a method for controlling the temperature of a cooling fluid in a cooling system arranged in fluid connection with an internal combustion engine of a vehicle, the cooling system comprising a cooling circuit connected to a condenser of a waste heat recovery system, a cooling pump arranged to circulate a cooling fluid through the cooling circuit and a radiator arranged for cooling the cooling fluid, a bypass circuit, a first valve unit and a second valve unit. The first valve unit is arranged to control the flow of cooling fluid through the radiator and the bypass circuit respectively, and the second valve unit is arranged to control the flow of cooling fluid passing through the condenser. The method steps include:
- determining a condenser-in cooling fluid temperature by means of a first temperature sensor arranged upstream of the condenser and downstream of a first mixing point, where the cooling fluid from the radiator and bypass circuit are mixed, and an engine-in cooling fluid temperature by means of a second temperature sensor arranged upstream of the internal combustion engine and downstream of a second mixing point, where the cooling fluid from the condenser and bypass circuit are mixed; and
- controlling the flow of the cooling fluid in the cooling system by means of the first valve unit and/or the second valve unit based on the determined condenser-in and engine-in fluid temperatures.

The control step may comprise comparing the determined cooling fluid temperatures with pre-defined reference cooling fluid temperatures. In this way, an efficient control method can be provided. The control step may comprise increasing the flow of cooling fluid through the radiator by means of the first valve unit if the engine-in cooling fluid temperature is higher than the pre-defined engine-in cooling fluid temperature. In this way the cooling effect in the cooling system may be increased. The control step may additionally or alternatively comprise decreasing the flow of cooling fluid from the bypass circuit via a second return pipe to the first mixing point by means of the second valve unit, if the condenser-in cooling fluid temperature is higher than the pre-defined condenser-in cooling fluid temperature. Alternatively, the flow of cooling fluid from the bypass circuit via a second return pipe to the first mixing point can be increased by means of the second valve unit, if the condenser-in cooling fluid temperature is lower than the pre-defined condenser-in cooling fluid temperature. In this way energy efficient control of the cooling system can be provided.

The control step may comprise arranging the second valve unit to adapt to the position of the first valve unit to thereby control the condenser-in and/or the engine-in fluid temperature. In this way, delays in controlling the system can be avoided.

The determination step may further comprise determining at least one further cooling fluid temperature which is selected from an engine-out, a radiator-out or a condenser-out cooling fluid temperature, or a condenser-in or a condenser-out working fluid temperature, the fluid temperatures being determined by means of a respective third temperature sensor, fourth temperature sensor, fifth temperature sensor, sixth temperature sensor or seventh temperature sensor. In this way, the accuracy of the system can be improved.

The control step may comprise lowering the pre-defined condenser-in and engine-in cooling fluid temperatures if at least one of the engine-out, radiator-out or condenser-out cooling fluid temperatures or the condenser-in or condenser-out working fluid temperatures exceeds a pre-defined value for the engine-out, a radiator-out or a condenser-out cooling fluid temperature. A flexible and accurate control of the cooling system can thus be provided.

The control step can further comprise predicting coming driving conditions by means of look-ahead active prediction function and controlling the condenser-in and the engine-in cooling fluid temperatures further based on the predicted driving conditions. In this way, an energy-efficient control of the cooling system may be achieved, and thus for example fuel consumption reduced.

The present invention also relates to a cooling system assiciated with an internal combustion engine of a vehicle, the cooling system comprising a cooling circuit connected to a condenser of a waste heat recovery system , a cooling pump arranged to circulate a cooling fluid through the cooling circuit and a radiator arranged for cooling the cooling fluid , a bypass circuit, a first valve unit and a second valve unit, wherein the first valve unit is arranged to control the flow of cooling fluid through the radiator and the bypass circuit respectively, and the second valve unit is arranged to control the flow of cooling fluid passing through the condenser of the waste heat recovery system . The cooling system is connected to a control unit adapted to control the first valve unit and the second valve unit so that the flow of the cooling fluid in the cooling system is controlled based on temperature values determined by a first temperature sensor arranged upstream of the condenser and downstream of a first mixing point, where the cooling fluid from the radiator and bypass circuit are mixed, and a second temperature sensor arranged upstream of the internal combustion engine and downstream of a second mixing point, where the cooling fluid from the condenser and bypass circuit are mixed.

The cooling circuit may comprise at least one additional temperature sensor selected from a third temperature sensor arranged between the internal combustion engine and the first valve unit, a fourth temperature sensor arranged between the radiator and the first mixing point, a fifth temperature sensor arranged between the condenser and the second mixing point, a sixth temperature sensor arranged in the waste heat recovery system upstream of the condenser to measure the condenser-in temperature of the working fluid or a seventh temperature sensor arranged in the waste heat recovery system downstream of the condenser to measure the condenser-out temperature of the working fluid, wherein the at least one additional temperature sensor is connected to the control unit. By the use of additional sensor units the accuracy of the control may be improved.

The control unit is suitably adapted to control the engine-in temperature of the cooling fluid in the cooling circuit by means of the first valve unit to increase the flow of cooling fluid through the radiator and/or to reduce the flow of cooling fluid passing through the bypass circuit by means of the second valve unit. In this way the cooling effect may be improved and the fluid temperature can be controlled to at least some extent without unnecessary delays.

The cooling circuit can be arranged with one cooling pump to circulate the cooling fluid through the cooling circuit. Thus, the system can be made compact and the weight of the system can be minimized.

The invention also relates to a waste heat recovery system connected to the cooling system described above via a condenser. Thus a compact waste heat recovery and cooling system arrangement can be provided.

The present invention also relates to a vehicle, which comprises a cooling system as described above or a waste heat recovery system as described above.

The invention also relates to a computer program, wherein said computer program comprises program code for causing an electronic control unit or a computer connected to the electronic control unit to perform the method steps defined above.

Furthermore, the present invention relates to a computer program product comprising a program code stored on a computer-readable medium for performing the method steps as defined above, when said computer program is run on an electronic control unit or a computer connected to the electronic control unit.

Further objects, features and advantages of the present invention are described below in the detailed description.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
- Fig. 1: schematically illustrates a vehicle comprising a cooling system of the present disclosure;
- Fig. 2: schematically illustrates an example embodiment of a waste heat recovery system connected to a cooling system of the present disclosure by means of a condenser;
- Fig. 3: schematically illustrates another example embodiment of a waste heat recovery system connected to a cooling system of the present disclosure by means of a condenser;
- Fig. 4: schematically illustrates a flow chart for a method for controlling the temperature of a cooling system according to an embodiment of the invention; and
- Fig. 5: schematically illustrates a control unit or computer according to an embodiment of the invention.

### DETAILED DESCRIPTION

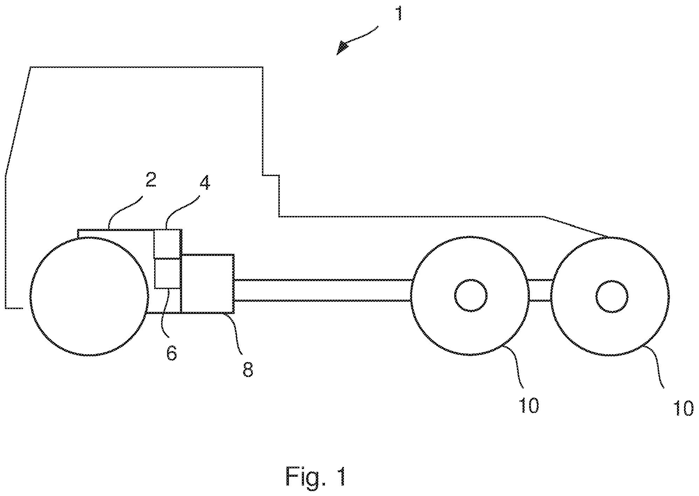

Fig. 1 schematically shows a side view of a vehicle 1 comprising an internal combustion engine 2, a waste heat recovery system 4 associated with the internal combustion engine 2 and a cooling system 6 connected to the waste heat recovery system 4. The vehicle 1 further comprises a gearbox 8 connected to the driving wheels 10 of the vehicle 1. The vehicle 1 may be a heavy vehicle, e.g. a truck or a bus. The vehicle 1 may alternatively be a passenger car. The vehicle may be a hybrid vehicle comprising an electric machine (not shown) in addition to the combustion engine 2.

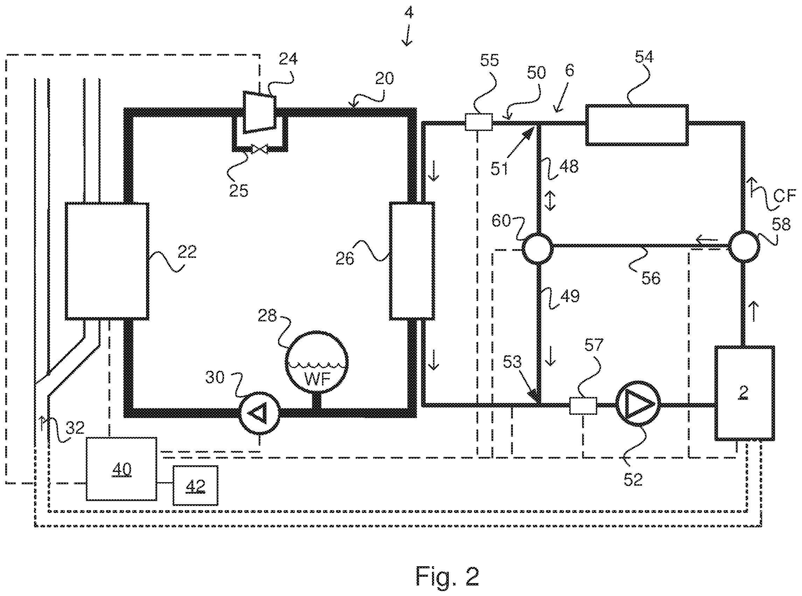

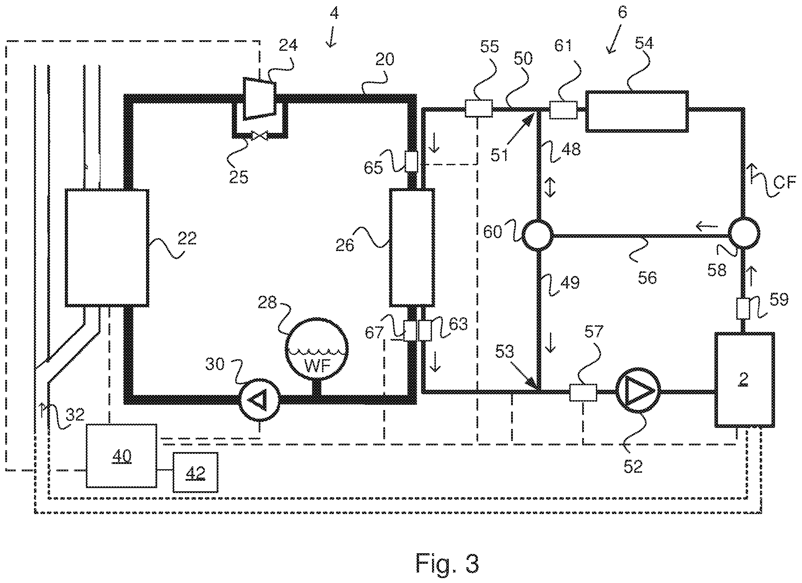

Reference is now made to Fig. 2 and 3 which schematically illustrate example embodiments of a cooling system of the present invention connected to a waste heat recovery system via a condenser. Each one of Fig. 2 and 3 schematically shows the waste heat recovery and the cooling systems 4, 6 arranged in fluid connection with an internal combustion engine 2 of a vehicle 1.

Generally, the cooling system 6 may be a part of a combustion engine cooling system and may thus cool both the internal combustion engine and the condenser of the waste heat recovery system. Alternatively, the cooling system is a separate cooling system. In the embodiments shown in Fig. 2 and 3, the cooling system 6 is a part of the internal combustion engine cooling system 6 and may thus cool both the internal combustion engine 2 and the condenser 26 of the waste heat recovery system 4. The cooling system 6 comprises a cooling circuit 50 connected to the condenser 26 of the waste heat recovery system 4, a cooling pump 52 arranged to circulate a cooling fluid CF through the cooling circuit 50 and a radiator 54 arranged for cooling the cooling fluid CF leaving the internal combustion engine 2. In the embodiments shown in Fig. 2 and 3, the cooling pump 52 is placed upstream of the internal combustion engine 2 and downstream of the condenser 26. The cooling pump 52 can be driven by the internal combustion engine 2. A bypass circuit 56 is arranged in fluid connection with a first return pipe 49 leading the bypass flow towards the internal combustion engine 2, a second return pipe 48 leading the bypass flow towards the condenser 26, a first valve unit 58 and a second valve unit 60. The cooling fluid CF is herein illustrated as arrows also showing the flow direction of the cooling fluid CF through the cooling circuit 50. The cooling fluid CF may be fed via the bypass circuit 56 and the second valve 60 to the condenser 26 via the second return pipe 48 or back to the internal combustion engine 2 via the first return pipe 49, and the possible directions of the flows are illustrated by arrows in Fig. 2 and 3. The first valve unit 58 is suitably arranged to control the flow of cooling fluid CF through the radiator 54 and the bypass circuit 56 respectively. The second valve unit 60 is suitably arranged to control the flow of the cooling fluid CF passing through the condenser 26 of the waste heat recovery system 4. The second valve unit is suitably arranged to control the flow through the condenser by means of controlling the flow of the cooling fluid passing through the bypass circuit 56 and the first and second return pipes 49, 48, respectively.

The waste heat recovery system 4 connected to the cooling system 6 is suitably arranged in a vehicle as shown in Fig. 1. The waste heat recovery system 4 comprises a working fluid circuit 20, wherein the working fluid is arranged to pass through an evaporator 22, an expander 24 and a condenser 26. The working fluid circuit comprises a reservoir 28 for the working fluid WF and a pump 30 arranged to pump the working fluid WF through the circuit 20. The evaporator 22 is arranged for heat exchange between the working fluid WF and a heat source 32 in fluid connection with the internal combustion engine 2. The condenser 26 of the waste heat recovery system 4 is connected to the cooling system 6. The waste heat recovery system 4 is fluidly connected to the heat source 32 connected to the evaporator 22, and the heat source is herein exemplified as exhaust gases from the internal combustion engine 2. The exhaust gases 32 are illustrated as an arrow in an exhaust pipe, wherein the exhaust gases 32 may be controlled to pass through the evaporator 22 or to bypass the evaporator 22. The waste heat recovery system 4 may comprise a plurality of evaporators 22, each connected to a different heat source 32. The evaporator 22 is suitably a heat exchanger connected to the heat source 32 and the working fluid circuit 20. The heat transfer between the working fluid WF and the heat source 32 is an exchange of energy resulting in a change in temperature. The waste heat recovery system 4 is suitably based on an organic Rankine cycle. The working fluid WF is thus suitably organic, such as ethanol or R245fa. The waste heat recovery system 4 is thus configured such that the liquid working fluid WF is pumped from low pressure to high pressure and enters the evaporator 22. The working fluid WF is thereby heated by the heat source 32 connected to the evaporator 22 and the working fluid WF is thus evaporated. The vapour is then expanded in the expander 24 whereby mechanical work is produced and the temperature and the pressure of the vapour is decreased. The mechanical work may for example be transferred to the crankshaft of the internal combustion engine 2 and thus be used to propel the vehicle 1 or the mechanical work may be used to drive for example a generator. The vapour thereafter enters the condenser 26 where condensation through heat exchange between the vapour and the cooling fluid CF of the cooling system 6 brings the working fluid WF back to its initial liquid state. Thus, the heat source 32 provides energy entering the waste heat recovery system 4 and the energy leaves the waste heat recovery system 4 as mechanical work via the expander 24 and as heat via the cooling system 6 cooling the condenser 26. The temperature in the waste heat recovery system 4 depends on the amount of energy entering the system 4 and the amount of energy leaving the system 4. Only vapour should enter the expander 24 and the waste heat recovery system 4 therefore comprises a bypass arrangement 25, such that in the case where the working fluid WF is still in a liquid state downstream of the evaporator 22, the working fluid WF can bypass the expander 24 through the bypass arrangement 25. The pump 30 pressurizing and circulating the working fluid WF can be electrically driven. The WHR circuit 20 may be arranged with only one pump, whereby the amount of heavy components in the circuit can be minimized. The waste heat recovery system 4 may comprise one or more evaporators/heat exchangers 22. The waste heat recovery system 4 may for example comprise a recuperator arranged to pre-heat the working fluid WF before entering the evaporator 22. The waste heat recovery system 4 may also comprise one or more condensers 26, such that cooling down of the working fluid WF may be performed in multiple steps. Furthermore, the waste heat recovery system 4 may comprise one or more expanders 24. The expander 24 may be a turbine or a piston expander.

In the cooling system 6, during the normal operating conditions there should always be a flow of cooling fluid CF through the radiator 54. A second valve unit 60 can mix the flow from the radiator 54 with some hotter cooling fluid from the bypass circuit 56 and thereby reach a desired condenser-in temperature. The amount of the hotter cooling fluid from the bypass circuit 56 can be controlled by means of the second valve unit 60. The bypass circuit 56 is arranged in fluid connection with the first return pipe 49, whereby hot cooling fluid can be fed back to the internal combustion engine if desired and with a second return pipe through which hot cooling fluid can be fed to the condenser if desired. The condenser-in temperature is measured by means of a first sensor unit 55, which is connected to a control unit 40. A desired condenser-in temperature is pre-determined as a reference fluid temperature and the control unit 40 is arranged to control the valve units in such a way that the desired condenser-in temperature is reached. In the corresponding way, the engine-in temperature is measured by means of a second sensor unit 57, and a desired engine-in temperature is pre-determined as a reference fluid temperature and the control unit 40 is arranged to control the valve units such that the desired engine-in temperature is reached. To reach the desired engine-in temperature, the first valve unit 58 is arranged to control the flow of cooling fluid CF passing through the radiator 54 and mix it with the bypass flow if necessary. For example, when the condenser-in temperature is too low, the second valve unit 60 can be arranged to mix the flow through the radiator with some hotter cooling fluid passing through the bypass circuit 56 via the second return pipe 48 and thus reach the desired condenser-in temperature. On the other hand, when the internal combustion engine has reached very high operating temperature it may be necessary to lead all the cooling fluid through the radiator by means of controlling the first valve unit accordingly. Thus, if the engine-in temperature is too high, the first valve unit 58 can be arranged to lead all the cooling fluid through the radiator and correspondingly, the second valve unit 60 is adapted to decrease the bypass flow via the second return pipe 49 if the condenser-in temperature is too high. The control unit is suitably adapted to control the engine-in temperature of the cooling fluid CF in the cooling circuit 50 by means of the first valve unit 58 to increase the flow of cooling fluid CF through the radiator 54 and/or to reduce the flow of cooling fluid CF passing through the bypass circuit 56 by means of the second valve unit 60.

The pipes in the cooling circuit 50 are preferably arranged such that one cooling pump 52 is sufficient to circulate the cooling fluid through the internal combustion engine 2 and the condenser 26 connected to the WHR system 4. For example, the pipes in the cooling system are suitably arranged as short as possible, whereby a compact construction for the cooling system and suitably the whole WHR system may be obtained. If only one pump is used, it is preferably placed upstream of the internal combustion engine 2 and downstream of the condenser.

If the pipes in the cooling circuit are long, there may be transport delays of the cooling fluid CF from for example from the radiator to the condenser. Also, the cooling system may include additional components to be cooled, such as a retarder. In this case, there may be a desire to improve the accuracy of the cooling system. The accuracy may be improved by incorporating at least one additional temperature sensor to the cooling system. Reference is made to Fig. 3 which shows additional sensor units in the cooling system. The at least one additional sensor may be arranged between the internal combustion engine 2 and the first valve unit 58, and is shown as an engine-out sensor 59, herein also referred to as a third temperature sensor. Alternatively or additionally, an additional sensor may be arranged between the radiator 54 and the first mixing point 51 and functions as a radiator-out sensor 61, herein also referred to as a fourth temperature sensor. A further sensor, referred to as a condenser-out or a fifth temperature sensor, may be additionally or alternatively placed between the condenser 26 and the second mixing point 53 and functions as a condenser-out sensor. Also, in case the cooling circuit is connected to retarder of a vehicle (not shown), a further retarder-in and/or retarder-out sensor may be included in the cooling system. In a further embodiment of the invention, a sixth temperature sensor 65 may be arranged in the waste heat recovery system 4 upstream of the condenser 26 to measure the condenser-in temperature of the working fluid WF. According to a further alternative, a seventh temperature sensor 67 may be arranged in the waste heat recovery system 4 downstream of the condenser 26 to measure the condenser-out temperature of the working fluid WF. The extra sensors increase the control performance in the cooling system 6. Also, in case a sensor unit is arranged in the working fluid in the waste heat recovery system 4 to measure the condenser-out temperature (seventh temperature sensor), the same sensor may also be used to control the waste heat recovery WHR system 6 and the amount of components may be reduced in the systems. Further, it can be beneficial to include a condenser-out sensor in the cooling circuit 50 to increase the performance of the engine-in temperature control performance. Thereby it is possible to control the condenser-out temperature by using the first valve 58 to control the cooling fluid CF flow and the engine-in temperature can be controlled in an improved way to reach a reference or desired engine-in temperature. As mentioned above, the second valve unit 60 can mix the flow from the radiator 54 with some hotter cooling fluid from the bypass circuit 56 and thereby reach a desired condenser-in temperature, as long as the radiator out temperature is sufficiently low and the radiator flow is sufficiently high. It is also possible to arrange the first valve unit and the second valve unit such that the second valve 60 automatically adapts to the position of the first valve 58. In this way the time delay between valve actuation and temperature changes can be minimized, especially in case of long pipes in the cooling system. Also, it is possible to control the cooling system such that the pre-defined condenser-in and engine-in cooling fluid temperatures are lowered if at least one of the engine-out, a radiator-out or a condenser-out cooling fluid temperature exceeds a pre-defined value for the engine-out, radiator-out or condenser-out cooling fluid temperature. In this way the accuracy and the flexibility of the system may be further improved.

According to the present disclosure, the cooling system 6 comprises or is connected to the control unit 40 which is adapted to control the flow of the cooling fluid CF in the cooling system. The control unit is adapted to control the first valve unit 58 and the second valve unit 60 so as to control the flow of cooling fluid CF based on temperature values determined by the first temperature sensor 55 arranged upstream of the condenser 26 and downstream of the first mixing point 51, where the cooling fluid from the radiator 54 and the bypass circuit 56 via the second return pipe 48 are mixed, and the second temperature sensor 57 arranged upstream of the internal combustion engine 2 and downstream of a second mixing point 53, where the cooling fluid from the condenser 26 and bypass circuit 56 via the return pipe 49 are mixed. In this way the first valve unit 58 can be arranged to control the flow of cooling fluid CF through the radiator 54 and the bypass circuit 56 respectively. In Fig. 2 an embodiment of the present invention is shown in which a condenser-in temperature value is determined by the first temperature sensor 55 arranged upstream of the condenser 26. It is essential that the first temperature sensor 55 is placed downstream of a first mixing point 51 where the cooling fluid from the radiator 54 and the bypass circuit 56 via the second return pipe 48 are mixed. The second temperature sensor 57 is arranged upstream of the internal combustion engine 2 to determine the engine-in temperature. Also the second sensor 57 should be placed downstream of a second mixing point 53 where the cooling fluid from the condenser 26 and bypass circuit 56 are mixed by means of the second valve unit 60. The temperature sensors should be placed as close to the mixing points of different flows as possible. However, the flows have to have a sufficient distance to properly mix, otherwise there is a risk that the temperature value measured is not representative. Therefore, the sensors should be placed downstream of the initial mixing points 51 and 53. The exact placement of the sensor units depends on the design of the cooling system, which in turn depends on how the waste heat recovery system 4 and the cooling system 6 are packed in a vehicle. The position for the sensor units can be therefore calculated or tested to assure that sufficient mixing of the fluids has occurred while the position is as close as possible to the initial mixing points 51 or 53, respectively. Generally the mixing point of the liquids is dependent on the design and construction of the cooling circuit, and as an example but not limited thereto, the first sensor unit can be arranged at a distance from the initial mixing point 51 downstream of the first mixing point, which is about 5 times the diameter of the pipe at the first initial mixing point 51. In a corresponding way, the second sensor unit 57 is suitably arranged downstream of the second mixing point 53 at a distance, which is 5 times the diameter of the pipe at the second initial mixing point.

The control unit 40 is arranged in connection to the internal combustion engine 2, the waste heat recovery system 4 and the cooling system 6. In the cooling system, the control unit 40 is arranged in connection to the first valve unit 58 and to the first sensor unit 55, the second valve unit 60 and the second sensor unit 57. In case the cooling system comprises additional temperature sensor units 59, 61, 63, 65 or 67 to determine at least one of engine-out, radiator-out and/or condenser-out cooling fluid CF temperatures or condenser-out working fluid WF temperatures, respectively, as mentioned above, also they can be connected to the control unit 40. In the waste heat recovery system 4 the control unit may be arranged for example in connection to the evaporator 14, the expander 16 and the pump 22 of the waste heat recovery system 4, but other or additional connections may be possible, such as a connection to the condenser 26. A computer 42 is suitably connected to the control unit 40. The control unit 40 is adapted to control the flow of the cooling fluid CF in the cooling system 6 by controlling the flow of the cooling fluid CF based on the determined condenser-in and engine-in fluid temperatures. Suitably, the temperatures are then compared with pre-determined reference values in the control unit. The control of the flow is performed by means of the first and second valve units 58, 60. The control unit 40 is suitably adapted to increase the flow of cooling fluid CF through the radiator 54 and/or by reducing the flow of cooling fluid CF through the bypass circuit 56 when the engine-in or the condenser-in temperatures are too high. The control unit 40 may also be arranged in connection with a control system of the vehicle. Thereby it will be possible for the control unit 40 to control the valves based also on other information in the vehicle. For example, the control unit 40 may be arranged in connection with a vehicle's look-ahead active prediction system, whereby it will be possible to predict the need for reducing the temperature of the cooling fluid depending on the expected driving conditions.

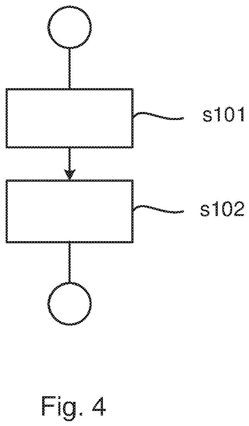

Fig. 4 shows a flowchart for controlling the temperature of a cooling fluid in a cooling system 6 arranged in fluid connection with an internal combustion engine 2 of a vehicle 1. The cooling system is suitably configured as described in Fig. 2 or 3. The method comprises the steps of:
- determining s101 a condenser-in fluid temperature of the cooling fluid CF by means of a first temperature sensor 55 arranged upstream of the condenser 26 and downstream of a first mixing point 51, where the cooling fluid CF from the radiator 54 and bypass circuit 56 are mixed, and an engine-in fluid temperature by means of a second temperature sensor 57 arranged upstream of the internal combustion engine 2 and downstream of a second mixing point 53, where the cooling fluid from the condenser 26 and bypass circuit 56 are mixed; and
- controlling s102 the flow of the cooling fluid CF in the cooling system 6 by means of the first valve unit 58 and/or the second valve unit 60 based on the determined condenser-in and engine-in fluid temperatures.

The method steps are suitably performed by means of the control unit 40 connected to the internal combustion engine 2, the waste heat recovery system 4 and the cooling system 6.

The step to control s102 the flow of the cooling fluid CF in the cooling system 6 by means of the first valve unit 58 and/or the second valve unit 60 based on the determined condenser-in and engine-in fluid temperatures is suitably performed by comparing the determined fluid temperatures with pre-defined reference fluid temperatures. The pre-defined temperatures are preferably stored in the control unit, e.g. in the computer connected thereto. The temperature of the cooling fluid CF in the cooling system 6 depends on the amount of energy entering the system 6 and the amount of energy leaving the system 6. Basically, the warmer the engine, the more energy enters the system. Also, since the cooling system is connected to the condenser 26 of the waste heat recovery system WHR, the energy entering the waste heat recovery system from the heat source 32 also indirectly affects the temperature of the cooling fluid CF. Therefore, by determining the condenser-in and the engine-in temperatures, the need for controlling the flow of cooling fluid CF by means of the first valve unit 58, and the second valve unit 60 can be effectively determined with minimum amount of components.

The step to control s102 the flow of the cooling fluid suitably comprises to increase the flow of cooling fluid CF through the radiator 54 by means of the first valve unit 58 if the engine-in cooling fluid CF temperature is higher than the pre-defined engine-in cooling fluid CF temperature. Also the step to control s102 may comprise increasing the flow of cooling fluid CF through the radiator 54 and correspondingly decrease the flow of cooling fluid from the bypass circuit, if the condenser-in cooling fluid CF temperature is higher than the pre-defined condenser-in cooling fluid CF temperature, or by increasing the flow of cooling fluid CF from the bypass circuit 56, if the condenser-in cooling fluid CF temperature is lower than the pre-defined condenser-in cooling fluid CF temperature. In this way, the cooling effect in the cooling system can be improved in an efficient way and the efficiency of the cooling system 6 is optimized during normal operation. Thus, the cooling effect in the cooling system 6 can be controlled such that the radiator 54 is used with full capacity. The flow of cooling fluid CF through the radiator 54 can be additionally increased by increasing the engine idling speed. When the vehicle 1 is standing still the internal combustion engine 2 is typically running with an idling speed. The cooling pump 52 is suitably connected to the crankshaft of the combustion engine 2 such that by increasing the idling speed of the internal combustion engine 2, the cooling pump 52 will pump an increased amount of cooling fluid CF through the cooling circuit 50. In this way, the flow through the radiator 54 is increased and the cooling effect is thus increased. Also, by controlling the cooling fluid CF temperature values in the cooling system 6 such that the temperature values are kept as close to the pre-defined cooling fluid temperature values as possible, engine efficiency is optimized.

The step to control s102 the temperature of the cooling fluid CF in the cooling system 6 suitably comprises to arrange the second valve unit 60 to adapt to the position of the first valve unit 58 to thereby control the condenser-in and/or the engine-in fluid temperatures. In this way, controlling of the valve units may be performed in an efficient and synchronized way.

The determination step s101 may further comprise determining at least one further cooling fluid temperature which is selected from an engine-out, a radiator-out or a condenser-out cooling fluid temperature, the cooling fluid temperature being determined by means of a respective third temperature sensor 59, fourth temperature sensor 61 or fifth temperature sensor 63. Alternatively or additionally a condenser-in or a condenser-out working fluid temperature may be determined by means of a respective sixth temperature 65 sensor or seventh temperature sensor 67. Suitably, the control step s102 also comprises comparing the determined cooling fluid CF temperatures with pre-defined reference cooling fluid CF temperatures.

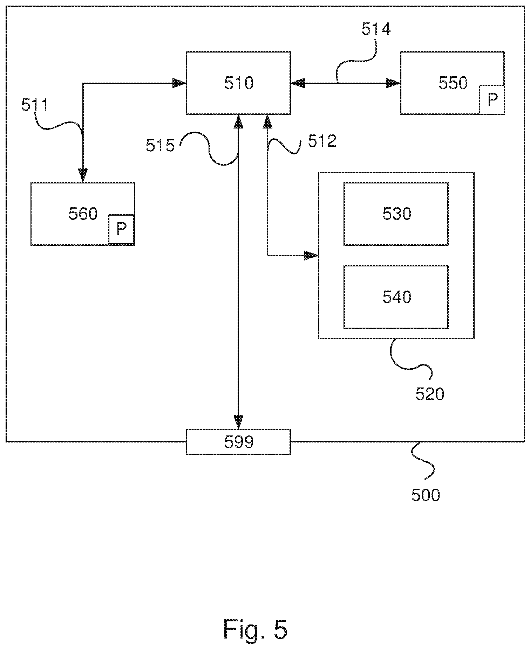

Fig. 5 schematically illustrates a device 500. The control unit 40 and/or computer 42 described with reference to Fig. 2 and 3 may in a version comprise the device 500. The term "link" refers herein to a communication link which may be a physical connection such as an optoelectronic communication line, or a non-physical connection such as a wireless connection, e.g. a radio link or microwave link. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P which comprises routines for a method for controlling the temperature of a cooling fluid in a cooling system 6 according to the invention. The computer program P comprises routines for determining the condenser-in and engine-in fluid temperatures of the cooling fluid CF based on temperature values measured by means of the first sensor unit 55 and second sensor unit 57, respectively. The computer program P comprises routines for controlling the flow of the cooling fluid CF in the cooling system 6 by means of the first valve unit 58 and/or the second valve unit 60 based on the determined condenser-in and engine-in fluid temperatures. The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

The foregoing description of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for a skilled person to understand the invention for various embodiments and with the various modifications appropriate to the intended use.

## Claims

1. A method for controlling the temperature of a cooling fluid in a cooling system (6) arranged in fluid connection with an internal combustion engine (2) of a vehicle (1), the cooling system comprising a cooling circuit (50) connected to a condenser (26) of a waste heat recovery system (4), a cooling pump (52) arranged to circulate a cooling fluid (CF) through the cooling circuit (50) and a radiator (54) arranged for cooling the cooling fluid (CF), a bypass circuit (56), a first valve unit (58) and a second valve unit (60), wherein the first valve unit (58) is arranged to control the flow of cooling fluid (CF) through the radiator (54) and the bypass circuit (56) respectively, and the second valve unit (60) is arranged to control the flow of cooling fluid (CF) passing through the condenser (26), **characterized by** the steps of:
- determining (s101) a condenser-in cooling fluid (CF) temperature by means of a first temperature sensor (55) arranged upstream of the condenser (26) and downstream of a first mixing point (51), where the cooling fluid (CF) from the radiator (54) and bypass circuit (56) are mixed, and an engine-in cooling fluid temperature by means of a second temperature sensor (57) arranged upstream of the internal combustion engine (2) and downstream of a second mixing point (53), where the cooling fluid from the condenser (26) and bypass circuit (56) are mixed; and
- controlling (s102) the flow of the cooling fluid (CF) in the cooling system (6) by means of the first valve unit (58) and/or the second valve unit (60) based on the determined condenser-in and engine-in fluid temperatures.

2. The method according to claim 1, wherein the control step (s102) comprises comparing the determined cooling fluid (CF) temperatures with pre-defined reference cooling fluid (CF) temperatures.

3. The method according to claim 2, wherein the control step (s102) comprises increasing the flow of cooling fluid (CF) through the radiator (54) by means of the first valve unit (58) if the engine-in cooling fluid (CF) temperature is higher than the pre-defined engine-in cooling fluid (CF) temperature.

4. The method according to claim 2 or 3, wherein the control step (s102) comprises decreasing the flow of cooling fluid (CF) from the bypass circuit (56) via a second return pipe (48) to the first mixing point (51) by means of the second valve unit (60), if the condenser-in cooling fluid (CF) temperature is higher than the pre-defined condenser-in cooling fluid (CF) temperature, or by increasing the flow of cooling fluid (CF) from the bypass circuit (56) via a second return pipe (48) to the first mixing point (51) by means of the second valve unit (60), if the condenser-in cooling fluid (CF) temperature is lower than the pre-defined condenser-in cooling fluid (CF) temperature.

5. The method according to any one of the preceding claims, **wherein** the control step (s102) comprises arranging the second valve unit (60) to adapt to the position of the first valve unit (58) to thereby control the condenser-in and/or the engine-in fluid temperature.

6. The method according to any one of the preceding claims, **wherein** the determination step (s101) further comprises determining at least one further cooling fluid temperature which is selected from an engine-out, a radiator-out or a condenser-out cooling fluid (CF) temperature, or a condenser-in or a condenser-out working fluid temperature, the fluid temperatures being determined by means of a respective third temperature sensor (59), fourth temperature sensor (61), fifth temperature sensor (63), sixth temperature (65) sensor or seventh temperature sensor (67).

7. The method according to claim 6, **wherein** the control step (s102) comprises lowering the pre-defined condenser-in and engine-in cooling fluid temperatures if at least one of the engine-out, radiator-out or condenser-out cooling fluid temperatures or the condenser-in or condenser-out working fluid temperatures exceeds a pre-defined value for the engine-out, a radiator-out or a condenser-out cooling fluid temperature.

8. The method according to any one of the preceding claims, **wherein** the control step (s102) further comprises predicting coming driving conditions by means of look-ahead active prediction function and controlling the condenser-in and the engine-in cooling fluid (CF) temperatures further based on the predicted driving conditions.

9. A cooling system (6) associated with an internal combustion engine (2) of a vehicle (1), the cooling system comprising a cooling circuit (50) connected to a condenser (26) of a waste heat recovery system (4), a cooling pump (52) arranged to circulate a cooling fluid (CF) through the cooling circuit (50) and a radiator (54) arranged for cooling the cooling fluid (CF), a bypass circuit (56), a first valve unit (58) and a second valve unit (60), wherein the first valve unit (58) is arranged to control the flow of cooling fluid CF through the radiator (54) and the bypass circuit (56) respectively, and the second valve unit (60) is arranged to control the flow of cooling fluid (CF) passing through the condenser (26) of the waste heat recovery system (4), **characterized in that** the cooling system (6) is connected to a control unit (40) adapted to control the first valve unit (58) and the second valve unit (60) so that the flow of the cooling fluid (CF) in the cooling system is controlled based on temperature values determined by a first temperature sensor (55) arranged upstream of the condenser (26) and downstream of a first mixing point, where the cooling fluid from the radiator (54) and bypass circuit (56) are mixed, and a second temperature sensor (57) arranged upstream of the internal combustion engine (2) and downstream of a second mixing point, where the cooling fluid from the condenser (26) and bypass circuit (56) are mixed.

10. The cooling system according to claim 9, wherein the cooling circuit (50) comprises at least one additional temperature sensor selected from a third temperature sensor (59) arranged between the internal combustion engine (2) and the first valve unit (58), a fourth temperature sensor (61) arranged between the radiator (54) and the first mixing point (51), a fifth temperature sensor (63) arranged between the condenser (26) and the second mixing point (53), a sixth temperature sensor arranged (65) in the waste heat recovery system (4) upstream of the condenser (26) to measure the condenser-in temperature of the working fluid (WF) or a seventh temperature sensor (67) arranged in the waste heat recovery system (4) downstream of the condenser (26) to measure the condenser-out temperature of the working fluid (WF), wherein the at least one additional temperature sensor is connected to the control unit (40).

11. The cooling system according to any of claims 9 or 10, **wherein** the control unit (40) is adapted to control the engine-in temperature of the cooling fluid (CF) in the cooling circuit by means of the first valve unit (58) to increase the flow of cooling fluid (CF) through the radiator (54) and/or to reduce the flow of cooling fluid (CF) passing through the bypass circuit (56) by means of the second valve unit (60).

12. The cooling system according to any of claims 9-11, wherein the cooling circuit (50) is arranged with one cooling pump (52) to circulate the cooling fluid through the cooling circuit (50).

13. A waste heat recovery system, **characterized in that** the waste heat recovery system (4) is connected to the cooling system (4) according to any one of claims 9-12 via a condenser (26).

14. A vehicle, **characterized in that** it comprises a cooling system (6) according to any of claims 9-12 or waste heat recovery system (4) of claim 13.

15. A computer program (P), wherein said computer program comprises program code to cause the cooling system (6) according to any one of the claims 9-12 to execute the steps of the method according to any of the claims 1-8.

16. A computer program product comprising a program code stored on a computer-readable medium for causing the cooling system (6) according to any one of the claims 9-12 to execute the method steps according to any of claims 1-8, when said computer program is run on the electronic control unit (40, 500) of claim 9 or a computer (42, 500) connected to the electronic control unit (40, 500) of claim 9

## Patentansprüche

1. Verfahren zum Steuern der Temperatur eines Kühlmittels in einem Kühlsystem (6), das in Fluidverbindung mit einem Verbrennungsmotor (2) eines Fahrzeugs (1) angeordnet ist, wobei das Kühlsystem einen mit einem Kondensator (26) eines Abwärmerückgewinnungssystems (4) verbundenen Kühlkreislauf (50), eine zum Zirkulieren eines Kühlmittels (CF) durch den Kühlkreislauf (50) angeordnete Kühlpumpe (52) und einen zum Kühlen des Kühlmittels (CF) angeordneten Kühler (54), eine Bypass-Leitung (56), eine erste Ventileinheit (58) und eine zweite Ventileinheit (60) umfasst, wobei die erste Ventileinheit (58) dazu angeordnet ist, den Strom des Kühlmittels (CF) durch den Kühler (54) bzw. die Bypass-Leitung (56) zu steuern, und die zweite Ventileinheit (60) dazu angeordnet ist, den Strom des durch den Kondensator (26) fließenden Kühlmittels (CF) zu steuern, **gekennzeichnet durch** die Schritte:
- Bestimmen (s101) einer Kondensatoreingangstemperatur des Kühlmittels (CF) mittels eines ersten Temperatursensors (55), der stromaufwärts des Kondensators (26) und stromabwärts eines ersten Mischpunktes (51) angeordnet ist, an dem das Kühlmittel (CF) aus dem Kühler (54) und der Bypass-Leitung (56) gemischt wird, und einer Motoreingangstemperatur des Kühlmittels mittels eines zweiten Temperatursensors (57), der stromaufwärts des Verbrennungsmotors (2) und stromabwärts eines zweiten Mischpunktes (53) angeordnet ist, an dem das Kühlmittel aus dem Kondensator (26) und der Bypass-Leitung (56) gemischt wird; und
- Steuern (s102) des Stroms des Kühlmittels (CF) in dem Kühlsystem (6) mittels der ersten Ventileinheit (58) und/oder der zweiten Ventileinheit (60) basierend auf den ermittelten Kondensatoreingangs- und Motoreingangsfluidtemperaturen.

2. Verfahren nach Anspruch 1, wobei der Steuerschritt (s102) ein Vergleichen der ermittelten Kühlmittel (CF)-Temperaturen mit vordefinierten Referenzkühlmittel (CF)-Temperaturen umfasst.

3. Verfahren nach Anspruch 2, wobei der Steuerschritt (s102) ein Erhöhen des Stroms von Kühlmittel (CF) durch den Kühler (54) mittels der ersten Ventileinheit (58) umfasst, falls die Motoreingangstemperatur des Kühlmittels (CF) höher ist als die vordefinierte Motoreingangstemperatur des Kühlmittels (CF).

4. Verfahren nach Anspruch 2 oder 3, wobei der Steuerschritt (s102) ein Verringern des Stroms von Kühlmittel (CF) aus der Bypass-Leitung (56) über eine zweite Rücklaufleitung (48) zum ersten Mischpunkt (51) mittels der zweiten Ventileinheit (60) umfasst, falls die Kondensatoreingangstemperatur des Kühlmittels (CF) höher ist als die vordefinierte Kondensatoreingangstemperatur des Kühlmittels (CF), oder durch Erhöhen des Stroms von Kühlmittel (CF) aus der Bypass-Leitung (56) über eine zweite Rücklaufleitung (48) zum ersten Mischpunkt (51) mittels der zweiten Ventileinheit (60), falls die Kondensatoreingangstemperatur des Kühlmittels (CF) niedriger ist als die vordefinierte Kondensatoreingangstemperatur des Kühlmittels (CF).

5. Verfahren nach einem der vorhergehenden Ansprüche, wobei der Steuerschritt (s102) ein Einrichten der zweiten Ventileinheit (60) dazu umfasst, sich an die Stellung der ersten Ventileinheit (58) anzupassen, um dadurch die Kondensatoreingangs- und/oder die Motoreingangsfluidtemperatur zu steuern.

6. Verfahren nach einem der vorhergehenden Ansprüche, wobei der Bestimmungsschritt (s101) ferner ein Bestimmen mindestens einer weiteren Kühlmitteltemperatur umfasst, die ausgewählt ist aus einer Motorausgangs-, einer Kühlerausgangs- oder einer Kondensatorausgangstemperatur des Kühlmittels (CF) oder einer Kondensatoreingangs- oder einer Kondensatorausgangstemperatur eines Arbeitsfluids, wobei die Fluidtemperaturen bestimmt werden mittels eines zugehörigen dritten Temperatursensors (59), vierten Temperatursensors (61), fünften Temperatursensors (63), sechsten Temperatursensors (65) oder siebten Temperatursensors (67).

7. Verfahren nach Anspruch 6, wobei der Steuerschritt (s102) ein Absenken der vordefinierten Kondensatoreingangs- und Motoreingangstemperaturen des Kühlmittels umfasst, falls mindestens eine der Motorausgangs-, Kühlerausgangs- oder Kondensatorausgangstemperaturen des Kühlmittels oder die Kondensatoreingangs- oder Kondensatorausgangstemperatur des Arbeitsfluids einen vordefinierten Wert für die Motorausgangs-, eine Kühlerausgangs- oder eine Kondensatorausgangstemperatur des Kühlmittels überschreitet.

8. Verfahren nach einem der vorhergehenden Ansprüche, wobei der Steuerschritt (s102) ferner ein Vorhersagen kommender Fahrbedingungen mittels einer aktiven Vorausschau-Vorhersagefunktion und ein Steuern der Kondensatoreingangs- und Motoreingangstemperaturen des Kühlmittels (CF) auf der Basis der vorhergesagten Fahrbedingungen umfasst.

9. Kühlsystem (6), das einem Verbrennungsmotor (2) eines Fahrzeugs (1) zugeordnet ist, wobei das Kühlsystem einen Kühlkreislauf (50), der mit einem Kondensator (26) eines Abwärmerückgewinnungssystems (4) verbunden ist, eine zum Zirkulieren eines Kühlmittels (CF) durch den Kühlkreislauf (50) angeordnete Kühlpumpe (52) und einen zum Kühlen des Kühlmittels (CF) angeordneten Kühler (54), eine Bypass-Leitung (56), eine erste Ventileinheit (58) und eine zweite Ventileinheit (60) umfasst, wobei die erste Ventileinheit (58) dazu angeordnet ist, den Strom des Kühlmittels (CF) durch den Kühler (54) bzw. die Bypass-Leitung (56) zu steuern, und die zweite Ventileinheit (60) dazu angeordnet ist, den Strom des durch den Kondensator (26) des Abwärmerückgewinnungssystems (4) fließenden Kühlmittels (CF) zu steuern, **dadurch gekennzeichnet, dass** das Kühlsystem (6) mit einer Steuereinheit (40) verbunden ist, die dazu eingerichtet ist, die erste Ventileinheit (58) und die zweite Ventileinheit (60) so zu steuern, dass der Strom des Kühlmittels (CF) in dem Kühlsystem auf der Basis von Temperaturwerten gesteuert wird, die von einem ersten Temperatursensor (55), der stromaufwärts des Kondensators (26) und stromabwärts eines ersten Mischpunktes angeordnet ist, an dem das Kühlmittel aus dem Kühler (54) und der Bypass-Leitung (56) gemischt wird, und einem zweiten Temperatursensor (57) bestimmt werden, der stromaufwärts des Verbrennungsmotors (2) und stromabwärts eines zweiten Mischpunktes angeordnet ist, an dem das Kühlmittel aus dem Kondensator (26) und der Bypass-Leitung (56) gemischt wird.

10. Kühlsystem nach Anspruch 9, wobei der Kühlkreislauf (50) mindestens einen weiteren Temperatursensor aufweist, der ausgewählt ist aus einem zwischen dem Verbrennungsmotor (2) und der ersten Ventileinheit (58) angeordneten dritten Temperatursensor (59), einem zwischen dem Kühler (54) und dem ersten Mischpunkt (51) angeordneten vierten Temperatursensor (61), einem zwischen dem Kondensator (26) und dem zweiten Mischpunkt (53) angeordneten fünften Temperatursensor (63), einem sechsten Temperatursensor (65), der in dem Abwärmerückgewinnungssystem (4) stromaufwärts des Kondensators (26) zum Messen der Kondensatoreingangstemperatur des Arbeitsfluids (WF) angeordnet ist, oder einem siebten Temperatursensor (67), der in dem Abwärmerückgewinnungssystem (4) stromabwärts des Kondensators (26) zum Messen der Kondensatorausgangstemperatur des Arbeitsfluids (WF) angeordnet ist, wobei der mindestens eine weitere Temperatursensor mit der Steuereinheit (40) verbunden ist.

11. Kühlsystem nach einem der Ansprüche 9 oder 10, wobei die Steuereinheit (40) dazu eingerichtet ist, die Motoreingangstemperatur des Kühlmittels (CF) im Kühlkreislauf mittels der ersten Ventileinheit (58) zu steuern, um den Strom von Kühlmittel (CF) durch den Kühler (54) zu erhöhen und/oder den Strom von durch die Bypass-Leitung (56) fließendem Kühlmittel (CF) mittels der zweiten Ventileinheit (60) zu verringern.

12. Kühlsystem nach einem der Ansprüche 9 bis 11, wobei der Kühlkreislauf (50) mit einer Kühlpumpe (52) versehen ist, um das Kühlmittel durch den Kühlkreislauf (50) zu zirkulieren.

13. Abwärmerückgewinnungssystem, **dadurch gekennzeichnet, dass** das Abwärmerückgewinnungssystem (4) mit dem Kühlsystem (4) nach einem der Ansprüche 9 bis 12 über einen Kondensator (26) verbunden ist.

14. Fahrzeug, **dadurch gekennzeichnet, dass** es ein Kühlsystem (6) nach einem der Ansprüche 9 bis 12 oder ein Abwärmerückgewinnungssystem (4) nach Anspruch 13 umfasst.

15. Computerprogramm (P), wobei das Computerprogramm Programmcode umfasst, um das Kühlsystem (6) nach einem der Ansprüche 9 bis 12 zu veranlassen, die Schritte des Verfahrens nach einem der Ansprüche 1 bis 8 auszuführen.

16. Computerprogrammprodukt, umfassend einen auf einem computerlesbaren Medium gespeicherten Programmcode zum Veranlassen des Kühlsystems (6) nach einem der Ansprüche 9 bis 12, die Verfahrensschritte nach einem der Ansprüche 1 bis 8 auszuführen, wenn das Computerprogramm auf der elektronischen Steuereinheit (40, 500) aus Anspruch 9 oder einem mit der elektronischen Steuereinheit (40, 500) aus Anspruch 9 verbundenen Computer (42, 500) ausgeführt wird.

## Revendications

1. Procédé de commande de la température d'un fluide de refroidissement dans un système de refroidissement (6) agencé en liaison fluidique avec un moteur à combustion interne (2) d'un véhicule (1), le système de refroidissement comprenant un circuit de refroidissement (50) connecté à un condenseur (26) d'un système de récupération de chaleur perdue (4), une pompe de refroidissement (52) agencée pour faire circuler un fluide de refroidissement (CF) à travers le circuit de refroidissement (50) et un radiateur (54) agencé pour refroidir le fluide de refroidissement (CF), un circuit de dérivation (56), une première unité de soupape (58) et une deuxième unité de soupape (60), dans lequel la première unité de soupape (58) est agencée pour commander l'écoulement du fluide de refroidissement (CF) à travers le radiateur (54) et le circuit de dérivation (56) respectivement, et la deuxième unité de soupape (60) est agencée pour commander l'écoulement du fluide de refroidissement (CF) passant à travers le condenseur (26), **caractérisé par** les étapes consistant à :
- la détermination (s101) d'une température de fluide de refroidissement (CF) dans le condenseur au moyen d'un premier capteur de température (55) disposé en amont du condenseur (26) et en aval d'un premier point de mélange (51), où le fluide de refroidissement (CF) provenant du radiateur (54) et du circuit de dérivation (56) est mélangé, et une température de fluide de refroidissement dans le moteur au moyen d'un deuxième capteur de température (57) disposé en amont du moteur à combustion interne (2) et en aval d'un deuxième point de mélange (53), où le fluide de refroidissement provenant du condenseur (26) et du circuit de dérivation (56) est mélangé ; et
- la commande (s102) de l'écoulement du fluide de refroidissement (CF) dans le système de refroidissement (6) au moyen de la première unité de soupape (58) et/ou de la deuxième unité de soupape (60) sur la base des températures de fluide déterminées dans le condenseur et dans le moteur.

2. Procédé selon la revendication 1, dans lequel l'étape de contrôle (s102) comprend la comparaison des températures de fluide de refroidissement (CF) déterminées avec des températures de fluide de refroidissement (CF) de référence prédéfinies.

3. Procédé selon la revendication 2, dans lequel l'étape de commande (s102) comprend l'augmentation du débit de fluide de refroidissement (CF) à travers le radiateur (54) au moyen de la première unité de soupape (58) si la température du fluide de refroidissement dans le moteur (CF) est supérieure à la température prédéfinie du fluide de refroidissement dans le moteur (CF).

4. Procédé selon la revendication 2 ou 3, dans lequel l'étape de commande (s102) comprend la diminution du débit de fluide de refroidissement (CF) du circuit de dérivation (56) via un deuxième tuyau de retour (48) vers le premier point de mélange (51) au moyen de la deuxième unité de soupape (60), si la température du fluide de refroidissement dans le condenseur (CF) est supérieure à la température prédéfinie du fluide de refroidissement dans le condenseur (CF), ou en augmentant le débit de fluide de refroidissement (CF) du circuit de dérivation (56) via un deuxième tuyau de retour (48) vers le premier point de mélange (51) au moyen de la deuxième unité de soupape (60), si la température du fluide de refroidissement dans le condenseur (CF) est inférieure à la température prédéfinie du fluide de refroidissement dans le condenseur (CF).

5. Procédé selon l'une quelconque des revendications précédentes, **dans lequel** l'étape de commande (s102) comprend l'agencement de la deuxième unité de vanne (60) pour s'adapter à la position de la première unité de soupape (58) afin de commander ainsi la température du fluide à l'entrée du condenseur et/ou à l'entrée du moteur.

6. Procédé selon l'une quelconque des revendications précédentes, **dans lequel** l'étape de détermination (s101) comprend en outre la détermination d'au moins une autre température de fluide de refroidissement qui est choisie parmi une température de fluide de refroidissement (CF) à la sortie du moteur, à la sortie du radiateur ou à la sortie du condenseur, ou une température de fluide de travail à l'entrée ou à la sortie du condenseur, les températures de fluide étant déterminées au moyen d'un troisième capteur de température (59), d'un quatrième capteur de température (61), d'un cinquième capteur de température (63), d'un sixième capteur de température (65) ou d'un septième capteur de température (67) respectifs.

7. Procédé selon la revendication 6, **dans lequel** l'étape de commande (s102) comprend l'abaissement des températures prédéfinies du fluide de refroidissement d'entrée du condenseur et d'entrée du moteur si au moins l'une des températures du fluide de refroidissement de sortie du moteur, de sortie du radiateur ou de sortie du condenseur ou des températures du fluide de travail d'entrée du condenseur ou de sortie du condenseur dépasse une valeur prédéfinie pour la température du fluide de refroidissement de sortie du moteur, de sortie du radiateur ou de sortie du condenseur.

8. Procédé selon l'une quelconque des revendications précédentes, **dans lequel** l'étape de commande (s102) comprend en outre la prédiction des conditions de conduite à venir au moyen d'une fonction de prédiction active d'anticipation et la commande des températures du fluide de refroidissement (CF) dans le condenseur et dans le moteur en se basant en outre sur les conditions de conduite prédites.

9. Système de refroidissement (6) associé à un moteur à combustion interne (2) d'un véhicule (1), le système de refroidissement comprenant un circuit de refroidissement (50) connecté à un condenseur (26) d'un système de récupération de chaleur perdue (4), une pompe de refroidissement (52) agencée pour faire circuler un fluide de refroidissement (CF) à travers le circuit de refroidissement (50) et un radiateur (54) agencé pour refroidir le fluide de refroidissement (CF), un circuit de dérivation (56), une première unité de soupape (58) et une deuxième unité de soupape (60), dans lequel la première unité de soupape (58) est agencée pour commander le flux de fluide de refroidissement CF à travers le radiateur (54) et le circuit de dérivation (56) respectivement, et la deuxième unité de soupape (60) est agencée pour commander le flux de fluide de refroidissement (CF) passant à travers le condenseur (26) du système de récupération de chaleur perdue (4), **caractérisé en ce que** le système de refroidissement (6) est connecté à une unité de commande (40) adaptée pour commander la première unité de soupape (58) et la deuxième unité de soupape (60) de sorte que l'écoulement du fluide de refroidissement (CF) dans le système de refroidissement est commandé sur la base de valeurs de température déterminées par un premier capteur de température (55) agencé en amont du condenseur (26) et en aval d'un premier point de mélange, où le fluide de refroidissement provenant du radiateur (54) et du circuit de dérivation (56) sont mélangés, et un deuxième capteur de température (57) agencé en amont du moteur à combustion interne (2) et en aval d'un deuxième point de mélange, où le fluide de refroidissement provenant du condenseur (26) et du circuit de dérivation (56) sont mélangés.

10. Système de refroidissement selon la revendication 9, dans lequel le circuit de refroidissement (50) comprend au moins un capteur de température supplémentaire sélectionné parmi un troisième capteur de température (59) agencé entre le moteur à combustion interne (2) et la première unité de soupape (58), un quatrième capteur de température (61) agencé entre le radiateur (54) et le premier point de mélange (51), un cinquième capteur de température (63) agencé entre le condenseur (26) et le deuxième point de mélange (53), un sixième capteur de température agencé (65) dans le système de récupération de chaleur perdue (4) en amont du condenseur (26) pour mesurer la température d'entrée du condenseur du fluide de travail (WF) ou un septième capteur de température (67) agencé dans le système de récupération de chaleur perdue (4) en aval du condenseur (26) pour mesurer la température de sortie du condenseur du fluide de travail (WF), dans lequel l'au moins un capteur de température supplémentaire est connecté à l'unité de commande (40).

11. Système de refroidissement selon l'une quelconque des revendications 9 ou 10, **dans lequel** l'unité de commande (40) est adaptée pour commander la température d'entrée du moteur du fluide de refroidissement (CF) dans le circuit de refroidissement au moyen de la première unité de soupape (58) pour augmenter le débit de fluide de refroidissement (CF) à travers le radiateur (54) et/ou pour réduire le débit de fluide de refroidissement (CF) passant à travers le circuit de dérivation (56) au moyen de la deuxième unité de soupape (60).

12. Système de refroidissement selon l'une quelconque des revendications 9 à 11, dans lequel le circuit de refroidissement (50) est agencé avec une pompe de refroidissement (52) pour faire circuler le fluide de refroidissement à travers le circuit de refroidissement (50).

13. Système de récupération de chaleur perdue, **caractérisé en ce que** le système de récupération de chaleur perdue (4) est relié au système de refroidissement (4) selon l'une quelconque des revendications 9 à 12 via un condenseur (26).

14. Véhicule, **caractérisé en ce qu'**il comprend un système de refroidissement (6) selon l'une quelconque des revendications 9 à 12 ou un système de récupération de chaleur perdue (4) selon la revendication 13.

15. Programme informatique (P), dans lequel ledit programme informatique comprend un code de programme pour amener le système de refroidissement (6) selon l'une quelconque des revendications 9 à 12 à exécuter les étapes du procédé selon l'une quelconque des revendications 1 à 8.

16. Produit de programme informatique comprenant un code de programme stocké sur un support lisible par ordinateur pour amener le système de refroidissement (6) selon l'une quelconque des revendications 9 à 12 à exécuter les étapes du procédé selon l'une quelconque des revendications 1 à 8, lorsque ledit programme informatique est exécuté sur l'unité de commande électronique (40, 500) de la revendication 9 ou l'ordinateur (42, 500) relié à l'unité de commande électronique (40, 500) de la revendication 9.
